# EUROPEAN PATENT APPLICATION

(11) **EP 1 110 991 A1**
(43) Date of publication of application: **27.06.2001**
(21) Application number: 00122497.1
(22) Date of filing: 14.10.2000
(51) Int. Cl.: C08J 3/22, B29B 9/14, B29B 9/12, B29B 11/14, B29B 11/16

(54) **Polymeric composition particularly suitable to blow-moulding applications**

(30) Priority: 06.12.1999 IT PN990090
(71) Applicant: Electrolux Zanussi S.p.A., 33170 Pordenone (IT)
(72) Inventor: Quattrin, Roberto, 33080 Murlis di Zoppola, Pordenone (IT); Sanita', Massimo, 33170 Pordenone (IT)
(74) Representative: Giugni, Valter

(57) **Abstract**

The invention relates to polymeric compositions using mineral fillers as builders. It provides for the mineral filler to be added to the base material in the form of a masterbatch consisting of at least an ethylene polymer, preferably low-density polyethylene (LDPE) and/or ethylene-vinyl-acetate (EVA), and said mineral filler (eg. CaCO₃) in a mass-related proportion situated anywhere between approx. 20/80 and 10/90.

## Description

The present invention refers to a polymeric composition that is particularly suitable to blow-moulding applications for the production of engineering thermoplastic articles.

As used in this specification, the term engineering thermoplastic articles shall be understood to include moulded parts which are manufactured starting from at least a additive-containing thermoplastic polymer, and which must be joined, for instance by means of screws or other fastening means, to other parts that may even be manufactured out of different materials. Articles of this kind are therefore adapted for use in view of making structural and/or functional component parts entering the construction of such complex finished products as electric home appliances, motor-vehicles and the like, and are therefore required to possess correspondingly good mechanical properties.

It is on the other hand a generally well-known fact that in the above cited sectors of the manufacturing industry it is absolutely necessary to be able to operate not only in compliance with "zero-defect" criteria, but also with material and processing costs that are as low as feasible. As a result, quite widespread is currently the utilization of compositions that have at least a readily available polymer, eg. polypropylene, as the base material, while adding some mineral fillers (such as calcium carbonate, talc or glass fibres) as a reinforcement to rather elevate percentages to the purpose of boosting certain properties thereof, such as rigidity or stiffness (modulus of elasticity), to a maximum extent.

While no excessive problems arise if the polymeric composition is not perfectly homogeneous when manufacturing such engineering thermoplastic articles by the injection moulding technique, when said articles are manufactured by blow moulding the absolute need on the contrary arises for a thorough mixing of the polymer (base material) and the filler to be ensured. The reason behind such a need lies in the fact that, during blow moulding, the polymeric composition in its melted state undergoes a remarkable stretching action, so that any possible agglomerate of filler material would eventually constitute a corresponding weak point causing the article to break down already when it is being blow-moulded.

Such a condition of thorough blending is not so easily reached with the traditional mixing techniques used to obtain the polymeric compositions of the afore cited kind. In fact, it usually proves necessary to each time identify extruder screws having the most suitable profile in view of ensuring an actual capability of effectively mixing the base material with the additives.

The Applicant has found that, through the use of products that are being already used in a different industrial sector, and namely for the production of packaging films, it is possible for a polymeric composition to be obtained, which is particularly suitable for manufacturing, by the blow moulding technique, engineering thermoplastic articles of the afore defined kind having an excellent quality and a reasonably low cost.

It therefore is a main purpose of the present invention, as recited in the appended claims, to provide not only a polymeric composition that is particularly suitable to blow moulding, but also the method for producing such a composition and the engineering thermoplastic articles manufactured by the blow moulding technique using said composition.

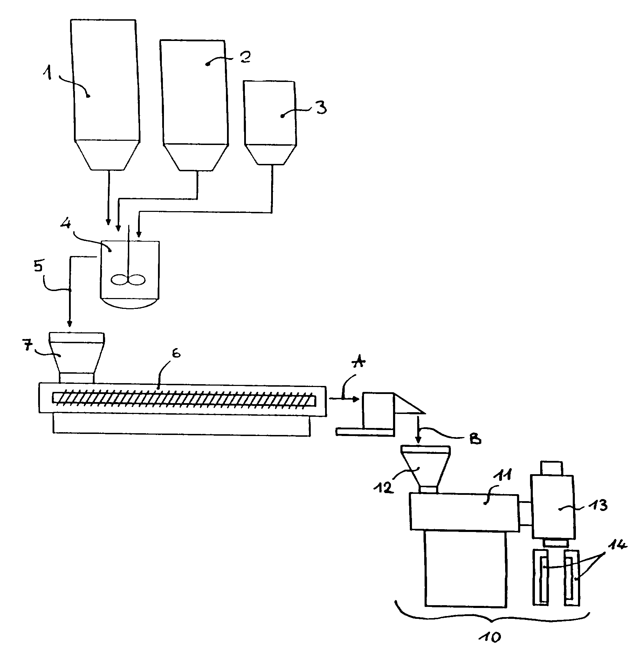

An embodiment of the present invention will be described below by mere way of non-limiting example with reference to the schematical illustration in the accompanying drawing.

In the assumption that engineering thermoplastic articles having polypropylene (PP) as a base material have to be manufactured by blow moulding for use in a home appliance, or in a motor-vehicle, the invention consists in adding a masterbatch constituted by a polymer based on low-density polyethylene (LDPE) or ethylene-vinyl-acetate (EVA) and a considerably greater percentage of calcium carbonate (CaCO₃) in order to ensure an optimum dispersion of the mineral additive, acting as the filler, in the base material. An example of masterbatch that is particularly suitable to this purpose, and is readily available on the market, can be found in the class of products supplied under the trade name of Omyalene™ by the company Omya.

In a preferred manner, the polymeric composition according to the present invention also comprises a small percentage of lubricant, such as for instance the Genocox G0365AK™ supplied by the company General Color.

In order to obtain the desired properties, the Applicant has found that it is absolutely necessary to:
a) ensure that the calcium carbonate in the base blend, or masterbatch, is sifted and/or finely ground into the form of particles having an average grain size of approx. 3 µm and a largest allowable grain size not exceeding approx. 10 µm;
b) ensure that, in the masterbatch, the mass-related proportion of polymer to calcium carbonate is comprised between approx. 20/80 and approx. 10/90. Particularly favourable results have been obtained with a LDPE (and/or EVA) to CaCO₃ proportion of 12 to 88;
c) ensure a final temperature that is higher than the melting temperature of both the polypropylene and the additive contained in the masterbatch inside the extruder used as a mixer for producing the polymeric composition.
The characteristics of one of the great number of possible polymeric compositions according to the present invention, ie. produced under addition, as a filler, of a masterbatch (containing CaCO₃ to a proportion of 88%) of the above indicated type, are given in Table 1 below:

**Table 1**

| | | | |
|---|---|---|---|
| Composition of the invention | Base material | Polypropylene (PP) | 65% |
| | Masterbatch | Omyalene™ (88%CaCO₃ 12%LDPE/ EV A) | 35% |
| | Lubricant | Lubricant additive (Genocox GO365AK™) | 1% |
| Physical properties of the composition according to the invention | Density | | 1.12 g/cm³ |
| | Fluidity | | 0.76 g/^{10'} |
| | Modulus of elasticity | | 2100 MPa |
| | Resilience (Izod E) | | 1000 J/m |
| | Yield point | | 27 MPa |
| | [Yield elongation | | 14% |
| Verification of suitableness to blow moulding - See note | Presence of mineral filler agglomerates with a grain size > 10 µm in the specimens | | NO |

The verification of the suitableness to blow moulding (*) consists in bringing to breakdown a tensile test specimen (eg. according to ASTM D6381 standards) of the polymeric composition, and detecting any possible presence, on the so deformed surface of the specimen, of agglomerates of mineral filler by means of an optical microscope. The presence of even a single agglomerate of CaCO₃ having a grain size in excess of 10 µm is considered as indicative of the non-suitability of the polymeric composition to blow moulding.

For manufacturing engineering thermoplastic articles on an industrial scale with the use of the polymeric composition according to the present invention, an advantageous industrial process has been found to consists of the one which is illustrated schematically in the accompanying drawing, in which:
- the numerals 1, 2, 3 are used to indicate storage silos, including the related final dispensing means, for storing the three components indicated also in the table appearing above (Table 1), ie.: polypropylene (PP); masterbatch (eg. Omyalene™ ), in which the particles of CaCO₃ have an average grain size of approx. 3 µm and a largest allowable grain size of approx. 10 µm (obtained by means of grinding and/or sifting); lubricant additive Geconox GO365AK™;
- the numeral 4 indicates a mixer, in which the above cited components, in their pre-determined doses, are thoroughly mixed without any heating;
- the numeral 6 indicates a single-screw extruder having a single feed hopper 7 supplied from the outlet 5 of the mixer 4. It is exactly in this extruder, in which the final temperature is higher than the melting temperature of both the base material (PP) and the polymer (LDPE/EVA) being a part of, ie. constituting the masterbatch (Omyalene™), that the poilymeric composition of the invention, as generally indicated at A in the drawing, is actually produced. It should be noticed that, in accordance with the masterbatches that may possibly be used, the plastic composition according to the invention has a mass-related content of mineral filler (ie. CaCO₃ in the particular example being described here) ranging from 5% to 45%;
- the numeral 8 is used to indicate a grinding mill for grinding the polymeric composition A, which is therefore ground into granules , having a size of up to a few millimetres, which are generally indicated at B in the drawing;
- the numeral 10 is used to generally indicate a blow moulding apparatus which, as generally well-known in the art, includes among other things:
   - an extruder 11, whose feed hopper 12 is supplied, via appropriate metering means (not shown), with the granules B of the polymeric composition of the invention;
   - a blow moulding tool 13 comprising a mould 14 that reproduces the desired finished article.

Further to advantages, in terms of mechanical properties, that have already been pointed out above, the present invention allows for engineering articles to be mass produced even on a very large scale, without blow-moulding defects whatsoever arising due to the mineral filler being capable to aggregate into irregular agglomerates.

It should finally be noticed that the invention is capable of being implemented industrially at reasonably low investment costs through the use, as explained above, of a simple single-screw extruder for the production of the polymeric composition, under addition of a simple mixer. It shall however be appreciated that the invention can also be implemented with the use of a more sophisticated twin-screw extruder, without any addition of a mixer. In both cases, anyway, the need does no longer arise for the screws of the extruders to be the subject of accurate, time-consuming studies in view of being adapted to the various formulations of the polymeric composition.

## Claims

1. Polymeric composition, particularly suitable to the production of engineering articles by the blow moulding technique, comprising at least a thermoplastic polymer, preferably polypropylene (PP), as a base material, and a mineral reinforcement, preferably calcium carbonate (CaCO₃), as a filler, **characterized in that** said mineral filler is added to the base material in the form of a per se known masterbatch constituted by at least an ethylene polymer, preferably low-density polyethylene (LDPE) and/or ethylene-vinyl-acetate (EVA), and said mineral filler in a mass-related proportion situated anywhere between approx. 20/80 and 10/90.

2. Thermoplastic composition according to claim 1, **characterized in that**, in the masterbatch, said mineral filler is in the form of particles having an average grain size of approx. 3 µm and a largest allowable grain size not in excess of approx. 10 µm.

3. Thermoplastic composition according to claim 1, **characterized in that** it has a mass-related content of mineral filler ranging from 5% to 45%.

4. Method for producing engineering articles by the blow moulding technique using the polymeric composition according to the preceding claims, **characterized in that** it comprises a phase of thorough mixing of the base material with the masterbatch under non-heated conditions, followed by a phase of processing in an extruder in view of raising the temperature of the polymeric composition up to a value beyond the one of the melting temperature of both the base material and the polymer being a part of the masterbatch.

5. Engineering thermoplastic articles for the construction od structural and/or functional component parts of home appliances, motor-vehicles and other complex products, **characterized in that** they are manufactured by blow moulding using the polymeric composition according to any of the preceding claims 1 to 3 and/or by means of the method according to claim 4.
